# DEMANDE DE BREVET EUROPEEN

(11) **EP 0 629 490 A2**
(43) Date de publication de la demande: **21.12.1994**
(21) Numéro de dépôt: 94401312.7
(22) Date de dépôt: 10.06.1994
(51) Int. Cl.: B29C 67/16, B29C 65/14, B29C 61/00, B65D 81/34, B29C 35/08, C08K 3/08

(54) **Procédé de fabrication d'un produit en un polymère thermofusible ou thermodurcissable comportant des zones sensibles à un rayonnement électromagnétique du domaine des micro-ondes ainsi que produit obtenu par le mise en oeuvre de ce procédé**

(30) Priorité: 10.06.1993 FR 9306986
(71) Demandeur: Breger, Guy, F-89100 Rosoy-Sens (FR)
(72) Inventeur: Breger, Guy, F-89100 Rosoy-Sens (FR)
(74) Mandataire: Cabinet HERRBURGER

(57) **Abrégé**

Procédé de fabrication d'un produit en un polymère thermofusible ou thermodurcissable comportant des zones sensibles à un rayonnement électromagnétique du domaine des micro-ondes, caractérisé en ce que l'on combine au polymère un additif réactivable sous forme d'une poudre ou d'un dépôt finement divisé constituant des dipôles sensibles à l'action du rayonnement électromagnétique du domaine des micro-ondes.

Produit en un polymère thermofusible ou thermodurcissable comportant des zones sensibles à un rayonnement électromagnétique du domaine des micro-ondes, caractérisé en ce qu'il est obtenu par la mise en oeuvre du procédé

## Description

La présente invention concerne un procédé de fabrication d'un produit en un polymère thermofusible ou thermodurcissable comportant des zones sensibles à un rayonnement électromagnétique du domaine des micro-ondes.

Les polymères sont connus depuis longtemps et leurs propriétés ont été mises à profit dans de nombreuses applications.

Ils sont classiquement classés en deux catégories, à savoir :
- d'une part, les polymères thermofusibles qui ramollissent, par chauffage, l'élévation de température diminuant la force des liaisons intermoléculaires entre les différentes chaînes de polymères ; ces liaisons retrouvent leur caractère initial au refroidissement, et le processus peut être répété indéfiniment et,
- d'autre part, les polymères thermodurcissables, initialement liquides ou semi-liquides et qui, à la chaleur, se transforment irréversiblement en un polymère réticulé, dur, infusible et insoluble dans les solvants.

Il est également à noter que l'on peut améliorer les caractéristiques des différents polymères en leur ajoutant des composés tels que plastifiants charges ou stabilisants.

En outre, certains polymères thermofusibles peuvent subir des traitements particuliers permettant de les rendre thermorétractables ; cette possibilité a été largement mise à profit dans l'industrie de l'emballage, par exemple pour le groupage de produits dans des manchons thermorétractés.

Toutefois, dans les différentes applications des polymères, on rencontre des difficultés de mise en oeuvre, des défauts d'aspects et autres inconvénients.

La présente invention se propose de remédier à ces inconvénients en créant un procédé de fabrication d'un produit en un polymère thermofusible ou thermodurcissable comportant des zones sensibles à un rayonnement électromagnétique du domaine des micro-ondes de façon à permettre l'obtention de produits pouvant trouver de nombreuses applications parmi lesquelles on peut mentionner :
- la préparation de polymères,
- leur mise en oeuvre : extrusion, soudage, rétraction,
- la fabrication de films chauffants, scellants, collants et/ou rétractables,
- l'accrochage d'encre et vernis et de colle,
- le séchage d'encre, de peinture, de colle et de vernis,
- la réalisation de films d'emballage auto- perforants, auto-découpants,
- la réalisation d'emballages ...

Le procédé conforme à l'invention est caractérisé en ce que l'on combine au polymère un additif réactivable sous forme d'une poudre ou d'un dépôt finement divisé constituant des dipôles sensibles à l'action du rayonnement électromagnétique du domaine des micro-ondes, puis, immédiatement ou ultérieurement on soumet le produit à un rayonnement électromagnétique du domaine des micro-ondes.

La poudre ou le dépôt finement divisé peut être appliqué dans la masse du produit ou seulement en surface, soit localement, soit sur ou dans la totalité du celui-ci ; parmi les différents processus pouvant être utilisés pour la préparation de cette poudre ou de ce dépôt, une possibilité particulièrement avantageuse consiste à prévoir une sublimation sous vide suivie d'une condensation sur une paroi froide.

Le procédé selon l'invention consiste donc à combiner au polymère, avant son passage à l'état macromoléculaire ou lorsqu'il est déjà dans cet état, un additif réactivable sous la forme d'une répartition de particules très fines distribuées régulièrement ou par zone dans la masse du polymère ou à la surface de celui-ci, puis à soumettre ce polymère à un champ de micro-ondes pour engendrer une élévation de température dans le polymère ou partie du polymère chargé des particules de l'additif réactivable.

Conformément à l'invention, l'additif réactivable peut être un métalloïde, mais il est le plus souvent constitué par un métal à l'état pur ou combiné notamment sous forme de sel ou d'oxyde.

On opte, de préférence, pour un métal conducteur tel que l'aluminium, le cuivre, le fer, le cobalt, le nickel, l'argent ou l'or.

Selon une autre caractéristique de l'invention, l'additif réactivable est un métal non réfractaire et non électromagnétique.

Selon une autre caractéristique de l'invention, on combine l'additif réactivable au polymère en l'ajoutant au(x) monomère(s) servant à la préparation de celui-ci.

Cette variante de l'invention consiste donc à ajouter l'additif réactivable aux molécules non saturées, homogènes ou hétérogènes, d'un réacteur de polymérisation et à soumettre le contenu du réacteur à des rayonnements électromagnétiques du domaine des micro-ondes pendant la réaction. La concentration de l'additif est, en général, très faible et, si on prend l'exemple d'un mélange de départ formé de monomères de diglycol et de diisocyanate, l'additif peut être constitué par une poudre très fine d'aluminium à une concentration de l'ordre de 10-² à 10-^{s}.

Cette variante de l'invention trouve des applications dans la fabrication de polymères liquides, pâteux ou solides.

Selon une autre caractéristique de l'invention, on combine l'additif réactivable au polymère en l'ajoutant à la masse de celui-ci, avant la mise en forme du produit.

Cette variante de l'invention consiste donc à ajouter aux granulés de polymère un additif réactivable sous forme d'une poudre finement divisée. Le mélange peut ensuite être extrudé pourformerun film ou un tube. Or, l'adjonction d'une faible teneur en additif réactivable favorise l'agitation et l'homogénéisation du mélange et le contrôle de sa température à l'extrusion. La masse à extruder peut être soumise à un champ électromagnétique lorsqu'elle est encore à l'intérieur de la vis. Il est également possible de soumettre la masse à un champ de micro-ondes soit à la sortie de la vis, directement en amont de la sortie, soit dans la tuyère.

Cette variante est particulièrement intéressante dans le cas de l'extrusion simultanée d'un ou de plusieurs films ou tubes, auquel cas, on peut avantageusement mettre en oeuvre un additif réactivable à base de fer.

Un processus similaire a été appliqué à la coex- trusion à l'aide d'une tuyère plate. Dans ce cas, on a remplacé l'additif à base de fer par des particules d'aluminium suivant une concentration de 10-4. On a fait agir un champ de micro-ondes après l'extrusion des couches et avant leur calandrage.

Grâce à cette variante de l'invention, dans le cas d'un produit coextrudé polypropylène-polyamidepo- lypropylène, il n'est plus nécessaire de prévoir des couches d'adhésion et chaque tête d'extrusion n'ex- trude que l'une des couches sans adjonction d'une couche d'adhésion. Cela simplifie considérablement l'installation d'extrusion tout en améliorant l'efficacité du fonctionnement et la qualité du produit ainsi extrudé.

Selon une autre caractéristique de l'invention, on combine l'additif réactivable au polymère en le répartissant à la surface du produit lors de sa mise en forme.

Conformément à cette variante, la répartition peut être localisée (par zone) ou prévue sur la totalité du produit.

Dans tous les cas, on combine l'additif réactivable au polymère suivant une concentration très faible.

L'invention concerne également un produit en un polymère thermofusible ou thermodurcissable comportant des zones sensibles à un rayonnement électromagnétique du domaine des micro-ondes qui a été obtenu par la mise en oeuvre du procédé susmentionné.

Selon une autre caractéristique de l'invention, il s'agit là d'un produit tel que colle, vernis ou encre grasse ou liquide, caractérisé en ce qu'il est fabriqué à partir de monomères à réaction lente, d'un initiateur thermique et d'un additif réactivable de façon à sécher ou durcir très rapidement lorsqu'il est soumis à un rayonnement électromagnétique du domaine des micro-ondes.

Les monomères utilisés pour la préparation d'un tel produit peuvent être des composés ayant une durée de vie en pot remarquablement longue, très stables à la conservation, qui ne présentent pas de difficultés d'application, notamment au niveau de l'en- crassage des moyens d'application.

Dans le cas de l'application de colle ou de vernis, comme les monomères ne polymérisent pas rapidement en l'absence de champ électromagnétique, les rouleaux applicateurs, ou plus généralement les moyens d'application de ce produit sur les surfaces à revêtir, ne s'encombrent pas eux-mêmes de produit polymérisé donc dur. L'ensemble du produit reste très longtemps liquide. Ce n'est que lorsque l'article muni de l'enduction est soumis à un champ électromagnétique que le produit "prend" de façon quasi immédiate.

Le produit conforme à l'invention peut également être constitué par des encres grasses ou liquides à séchage immédiat, notamment de type polyuréthane contenant un additif réactivable. Une telle encre ne "sèche" pas sur les rouleaux de transfert et d'application, mais seulement lorsque le produit est soumis à un champ électromagnétique, et dans ce cas, la prise est quasi instantanée.

La mise en oeuvre de telles encres offre l'avantage, non seulement d'éviter des difficultés de nettoyage ou de remplacement de machines ou parties de machines encrassées par un produit polymérisé, mais également l'avantage d'éviter le dégagement de solvant toujours polluant et souvent dangereux pour la santé.

Dans un domaine relativement proche, le produit conforme à l'invention peut également être un support traité en surface par un additif réactivable de façon à permettre d'améliorer l'accrochage d'une impression : sur un objet ou un corps creux particulièrement difficile à imprimer, comme les objets en polypropylène injecté qui doivent passer à la flamme pour permettre l'accrochage d'une encre ou d'une décoration, il est avantageux d'appliquer une couche réactive renfermant un additif réactivable, obtenu par exemple par métallisation sous vide d'aluminium puis de faire passer l'objet ou le corps creux dans un champ de micro-ondes, juste avant de l'imprimer, par exemple, en sérigraphie ; on peut ainsi obtenir un accrochage parfait.

Selon une autre caractéristique de l'invention, le produit est un produit tel qu'emballage à opercule ou emballage à volume développable caractérisé en ce qu'il est constitué par un support sur lequel est appliquée, notamment localement, une enduction thermocollante constituée par un polymère thermofusible contenant un additif réactivable.

Conformément à l'invention, pour pouvoir perforer un emballage au moment d'un traitement, par exemple une cuisson, on peut fabriquer un conteneur formé d'un réceptacle fermé par un opercule, et réaliser l'opercule en un polymère thermofusible avec au moins une zone traitée par un additif réactivable de sorte que sous l'action d'un champ de micro-ondes, la zone traitée fasse fondre le polymère au voisinage de celle-ci.

Il peut également être intéressant, conformément à l'invention, de pouvoir disposer d'un conteneur ou plus généralement d'un emballage fermé par un opercule qui puisse se détacher au moment adéquat tout en constituant une sécurité d'inviolabilité, et, dans ce cas, l'opercule contient un film formé d'une zone traitée par un additif réactivable qui, sous l'action d'un champ de micro-ondes, fait fondre localement la matière thermofusible de l'opercule pour permettre de détacher le couvercle.

Conformément à l'invention, on peut également réaliser un emballage dont le volume peut être augmenté en repliant l'emballage sur le produit avec une ligne de thermosoudure lui permettant de prendre un plus grand volume, cette ligne étant constituée par une zone traitée par un additif réactivable en surface ou intégré dans la masse du film constituant l'emballage.

Selon une autre caractéristique de l'invention, le produit est un produit tel qu'un emballage caractérisé en ce qu'il comporte au moins une ligne de soudure obtenue en appliquant, l'une contre l'autre, deux surfaces en des polymères thermofusibles identiques ou différents contenant un additif réactivable et en les soumettant localement à l'action d'une source de micro-ondes en les comprimant l'une contre l'autre.

Conformément à cette variante de l'invention, l'emballage peut avantageusement être constitué par un film continu coopérant avec une zone traitée par un additif réactivable continu, elle aussi longitudinale.

Le produit conforme à l'invention peut également être constitué par un film thermocollant obtenu à partir de polymère thermofusible tel que des mélanges de polyéthylène, polypropylène ... communément appelés "holt-melt" contenant un additif réactivable à base d'aluminium.

Selon une autre caractéristique de l'invention, le produit est constitué par un film ou un manchon en un polymère thermofusible ayant subi un traitement permettant de le rendre thermorétractable et comportant des zones dans lesquelles il est combiné à un additif réactivable.

Cette variante de l'invention permet de remédier aux défauts d'aspect des manchons thermorétractables classiques.

Selon une autre caractéristique de l'invention, le produit est constitué par un film chauffant ou une plaque chauffante en un polymère thermodurcissable comportant des zones dans lesquelles il est combiné à un additif réactivable.

Selon l'invention, un film thermodurcissable enduit de l'additif réactivable, par impression ou métallisation sous vide, de préférence d'aluminium, peut permettre d'obtenir des températures pouvant monter jusqu'à 300°C. Le dépôt d'additif réactivable peut être localisé et sa nature adaptée en intensité pour obtenir toute une gamme de températures. Pour certains valeurs du dépôt, la température sera nulle : le dépôt sera transparent aux micro-ondes ou au contraire il les réfléchira totalement.

Cette variante de l'invention trouve une application pour la cuisson ou le réchauffage de produits alimentaires dans un four à micro-ondes avec effet de brunissement. Un tel effet peut être obtenu grâce à une plaque chauffante ou une grilloire obtenue en ajoutant un additif réactivable à un polymère thermodurcissable, par exemple, un polyétherimide ou un polyester avant polymérisation.

Les caractéristiques du procédé ainsi que du produit qui font l'objet de l'invention seront décrites plus en détail en se référant aux dessins annexés dans lesquels :
- la figure 1 est un schéma d'une machine d'emballage en continu avec thermosoudage du film,
- la figure 2 est une coupe partielle d'une barquette de produits alimentaires réalisée selon l'invention,
- la figure 3 est une vue schématique d'une autre barquette selon l'invention,
- la figure 4 est une vue en coupe partielle du bord de la barquette de la figure 3,
- les figures 5 et 6 montrent un emballagedéve- loppable selon l'invention,
- la figure 7 est une vue en coupe d'une soudure de deux films thermofusibles,
- la figure 8 montre une enduction thermofusible localisée,
- la figure 9A montre un manchon rétractable selon l'art antérieur,
- la figure 9B montre un manchon rétractable selon l'invention,
- les figures 10A et 10B montrent, comme les deux figures précédentes, un regroupement avec un manchon selon l'art antérieur et un manchon selon l'invention,
- la figure 11 montre un autre exemple d'emballage selon l'invention.

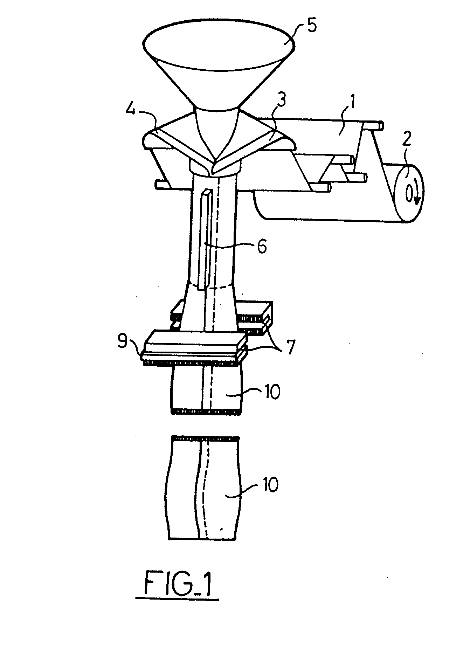

La figure 1 montre une machine d'emballage verticale. Cette machine est alimentée par un film 1, selon l'invention, à partir d'une bobine 2. Les bords 3, 4 du film doivent être soudés l'un sur l'autre autour du produit introduit en continu dans le tube par la trémie 5. Les deux bords 3, 4 sont repliés automatiquement l'un sur l'autre autour du tube terminant la trémie 5. En face de la zone de recouvrement des bords 3, 4, se trouve une antenne 6 alimentée par un générateur de micro-ondes, non représenté. Cette antenne est dirigée très localement sur la seule bande à souder. La figure 1 montre également deux mâchoires de thermosoudage 7, 8, où se trouve un antenne alimentée par un générateur micro-onde, non représenté, qui soudent et découpent à l'aide d'un couteau intermédiaire 9, les berlingots 10 ainsi emballés.

Contrairement aux procédés connus qui consistent à chauffer la soudure par des patins chauffants qui doivent transmettre la chaleur à travers les deux couches des deux bords, selon l'invention, l'énergie des micro-ondes est transmise directement au niveau de la jonction des deux couches 3, 4, ce qui permet non seulement de réduire considérablement l'énergie nécessaire au soudage et les conséquences accessoires de cet apport important d'énergie (réchauffage et déformation des parties voisines du film, réduction du temps de transfert de l'énergie suivant l'épaisseur des matériaux, etc...)

L'apport calorifique est réalisé directement dans la zone de contact de la soudure et le temps de transfert est nul ; la mise en oeuvre du procédé est ainsi sans inertie, ce qui permet d'augmenter de manière appréciable la vitesse de travail.

L'enveloppe ne subit aucune agression thermique de sorte que l'impression extérieure ne risque pas d'être détériorée. La structure de la soudure est également améliorée puisque cette soudure est faire à coeur ; on évite le cas de micro fuites.

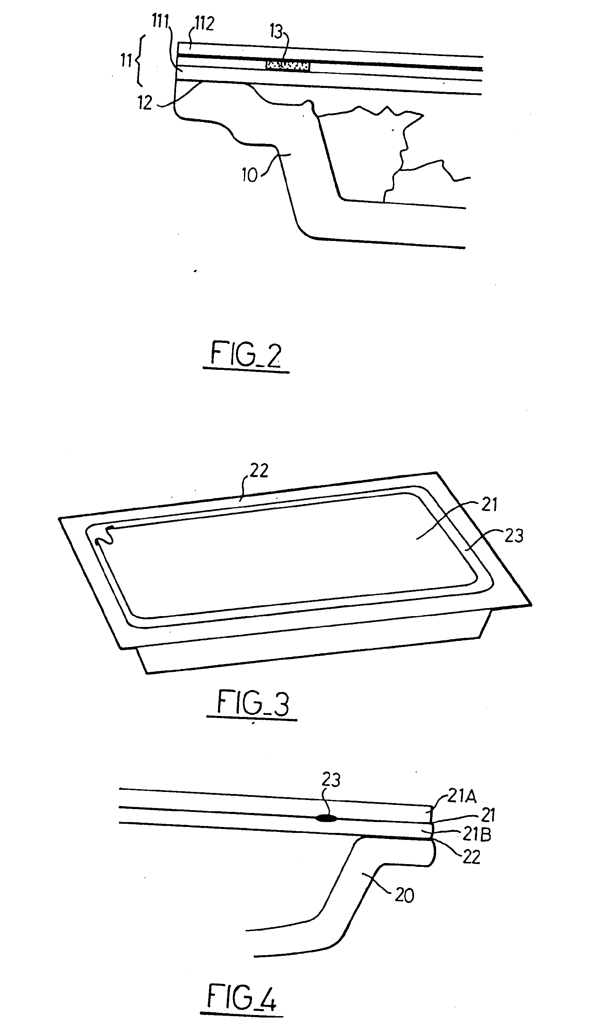

La figure 2 montre une vue en coupe schématique d'une telle barquette 10 munie d'un opercule 11 soudé le long de la zone périphérique 12 du bord de la barquette 10. L'opercule 11 est formé de deux couches 111 et 112, l'une étant un polymère, l'autre une feuille de papier. Intégrées à l'opercule, il y a des zones réactivables 13 qui, sous l'action d'un champ électromagnétique à micro-ondes, perforent l'opercule pour permettre d'équilibrer la pression interne du conditionnement.

L'opercule peut également comporter une ligne de coupure comme cela est indiqué à la figure 3. Cette figure montre une barquette 20 munie d'un opercule 21 fixé sur le bord de la barquette par une soudure périphérique 22. Une zone réactivable 23, en forme de fil, est intégrée à l'opercule. Lorsque le produit est soumis à un champ de micro-ondes, la concentration de l'énergie dans la zone filiforme 23 crée une élévation de température très localisée qui fait fondre l'opercule et permet d'enlever la partie à l'intérieur du fil de coupe 23.

La figure 4 montre, en coupe, le produit représenté à la figure 1 avec un film 20 fermé par l'opercule 21 constitué par deux couches 21a , 21 b, soudées l'une à l'autre, l'ensemble de l'opercule étant soudé suivant la zone de soudure 22. Entre les deux couches 21 a, 21 b de l'opercule 21, on a le fil de découpe 23 réalisé par une zone métallisée.

Selon l'invention, cette zone réactivable est constituée par une ligne formée de particules d'aluminium d'une épaisseur comprise entre 20 et 100 Â. la ligne métallisée 23 peut être une ligne continue ou une ligne interrompue. La zone 24 est une zone chauffante de moindre intensité aux micro-ondes.

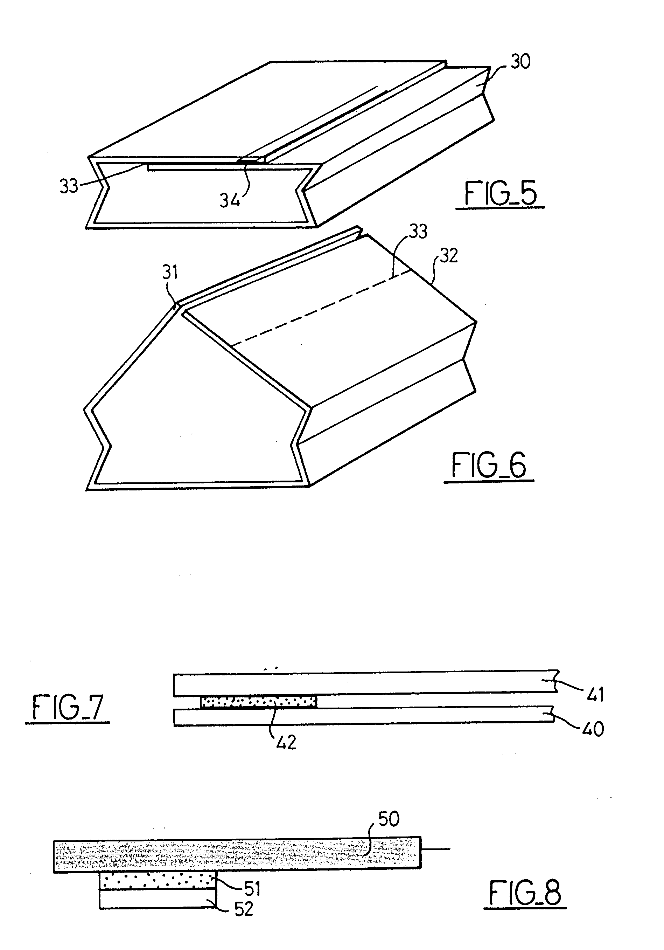

Les figures 5 et 6 montrent un autre exemple d'emballage réalisé à l'aide d'un film selon l'invention. Cet emballage présente un volume variable. Il s'agit d'une sorte de sachet qui, à la figure 5, est représenté en position repliée, de volume minimum et, à la figure 6, en position déployée de volume maximum.

A l'état replié, l'emballage 30, selon la figure 5, présente une première partie supérieure 31 rabattue sur la seconde partie 32, cette seconde partie étant elle-même repliée selon la ligne de pliage 33 (apparaissant à la figure 6). Cette ligne de pliage 33 n'apparaît qu'en bout à la figure 5. La partie supérieure 31 est fixée à l'état replié à l'autre partie 32 par une ligne de collage 34. Cette ligne de collage 34 est une ligne réactivable qui, lorsque l'emballage est placé dans un champ de micro-ondes, s'échauffe, ramollit les faces en regard du film constituant l'emballage et permet à l'emballage de se déployer sous l'effet de la dilatation de l'air ou des gaz contenus à l'intérieur de l'emballage. Un tel emballage convient notamment pour le conditionnement de produits alimentaires destinés à être réchauffés dans un four à micro-ondes et dont le volume intérieur augmente sous l'effet de la chaleur comme par exemple des produits alimentaires à base de pâtes crues levantes.

L'invention concerne également le scellage ou le soudage de surfaces.

Selon la figure 7, pour sceller ou souder par exemple un film d'emballage 40 sur un film d'emballage 41, on réalise une zone réactivable 42 dont la section est choisie pour que sous l'action d'un champ électromagnétique de micro-ondes, les zones correspondantes des deux films d'emballage 40, 41 passent à une température de surface correspondant à la phase vitreuse des polymères, ce qui assurera le scellage structurel des deux polymères.

La figure 8 montre une variante du moyen exposé ci-dessus. Il s'agit, selon la figure 8, d'un support 50 muni d'une zone réactivable 51 recouverte d'une bande d'un matériau macromoléculaire thermofusible 52. Sous l'action d'un champ de micro-ondes, la bande thermofusible fond et devient collante.

La présente invention permet également de réaliser des films rétractables globalement ou localement.

A cet effet, on réalise un film soit en continu, soit par pièces. Pour cela, on applique aux zones à rétracter une couche réactivable plus généralement une couche d'un additif métallique tel que AI, Fe, Ni, Cu ou des alliages métalliques. Cette couche est appliquée sur une épaisseur de l'ordre de 10 à 300 Â.

La figure 9A montre un produit 50 muni d'une bande 51 thermorétractée. Cette figure laisse apparaître les retraits 52 dans la partie principale de la bande.

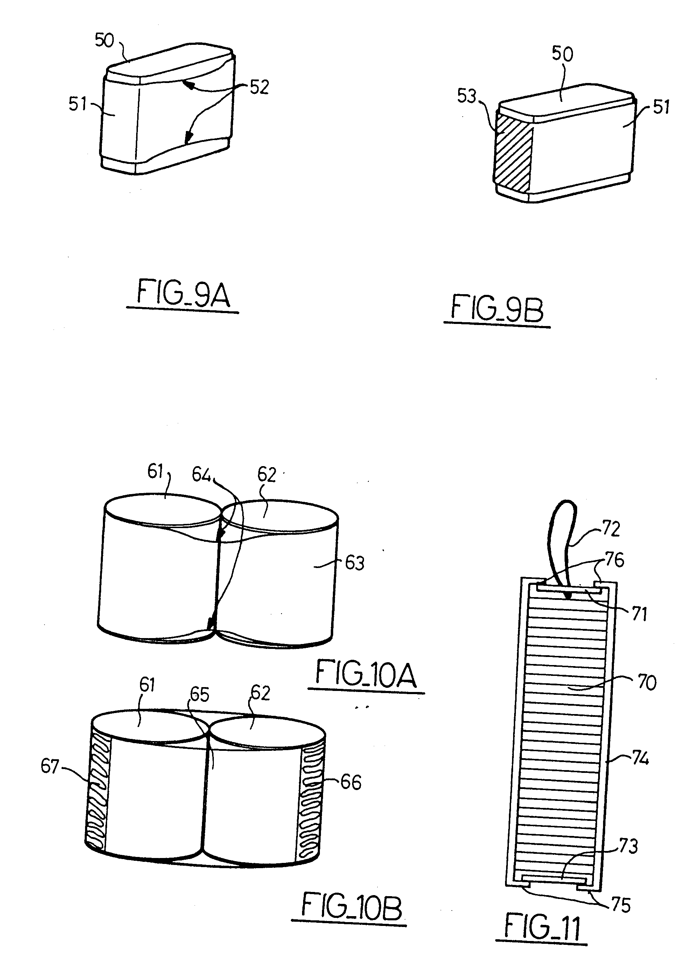

En revanche, selon l'invention (figure 9B), le produit 50 reçoit une bande 51 qui n'est rétractée que localement dans la zone hachurée 53, ce qui supprime toute déformation comme celle apparaissant à la figure 8.

Les figures 10A et 10B donnent un exemple similaire pour un manchon thermorétractable de regroupement. Selon la figure 9A, correspondant à l'art antérieur, les deux produits tels que des boîtes de conserve 61, 62 sont réunis par un manchon 63 thermorétractable présentant des déformations dans les zones 64. En revanche, selon l'invention, dans le cas de la figure 9B, les deux produits 61, 62 sont munis d'un manchon rétractable 65 ayant des zones réactivables 66, 67 qui évitent la déformation 64 due au retrait dans cette zone. Comme dans la zone correspondante du manchon 65, on ne produit pas de retrait, le retrait se limitant aux zones 66 et 67 soutenues par les produits 61, 62, il n'y a pas déformation. Cela est important, non seulement pour l'aspect du manchon après rétraction, mais également pour éviter toute déformation des inscriptions publicitaires qui peuvent être apportées sur le manchon.

La figure 11 montre un autre exemple de thermo- rétraction localisée dans le cas d'un conditionnement 70 de pastilles de coton. Il s'agit d'un empilage de pastilles de coton à démaquiller muni d'un couvercle 71 avec le cas échéant un anneau de suspension ou boucle de suspension 72 et un fond détachable 73. L'ensemble est placé dans un manchon imprimé et partiellement transparent 74 dont le bord inférieur 75 et le bord supérieur 76 sont métallisés. la rétraction ne se produit qu'au niveau de ces bords donnant un effet de sertissage.

## Revendications

1°) Procédé de fabrication d'un produit en un polymère thermofusible ou thermodurcissable comportant des zones sensibles à un rayonnement électromagnétique du domaine des micro-ondes, caractérisé en ce que l'on combine au polymère un additif réactivable sous forme d'une poudre ou d'un dépôt finement divisé constituant des dipôles sensibles à l'action du rayonnement électromagnétique du domaine des micro-ondes.

2°) Procédé selon la revendication 1, caractérisé en ce que l'on prépare la poudre ou le dépôt finement divisé par sublimation sous vide et condensation sur une paroi froide.

3°) Procédé selon l'une quelconque des revendications 1 et 2, caractérisé en ce que l'additif réactivable est un métal à l'état pur ou combiné, notamment sous forme de sel ou d'oxyde.

4°) Procédé selon la revendication 3, caractérisé en ce que l'additif métallique est non réfractaire et non électromagnétique.

5°) Procédé selon l'une quelconque des revendications 1 à 4, caractérisé en ce que l'on combine l'additif réactivable au polymère en l'ajoutant au(x) monomère(s) servant à la préparation de celui-ci.

6°) Procédé selon l'une quelconque des revendications 1 à 4, caractérisé en ce que l'on combine l'additif réactivable au polymère en l'ajoutant à la masse de celui-ci avant la mise en forme du produit.

7°) Procédé selon l'une quelconque des revendications 1 à 4, caractérisé en ce que l'on combine l'additif réactivable au polymère en le répartissant à la surface du produit lors de sa mise en forme.

8°) Procédé selon l'une quelconque des revendications 1 à 7, caractérisé en ce que l'on combine l'additif réactivable au polymère suivant une concentration très faible.

9°) Produit en un polymère thermofusible ou thermodurcissable comportant des zones sensibles à un rayonnement électromagnétique du domaine des micro-ondes, caractérisé en ce qu'il est obtenu par la mise en oeuvre du procédé selon l'une quelconque des revendications 1 à 8.

10°) Produit tel que le vernis ou encre grasse ou liquide selon la revendication 9, caractérisé en ce qu'il est fabriqué à partir de monomères à réaction lente, d'un initiateur thermique et d'un additif réactivable de façon à sécher ou durcir très rapidement lorsqu'il est soumis à un rayonnement électromagnétique du domaine des micro-ondes.

11°) Produit tel qu'emballage à opercule ou emballage à volume développable, selon la revendication 9, caractérisé en ce qu'il est constitué par un support sur lequel est appliquée, notamment localement, une enduction thermocollante constituée par un polymère thermofusible contenant un additif réactivable.

12°) Produit tel qu'emballage, selon la revendication 9, caractérisé en ce qu'il comporte au moins une ligne de soudure obtenue en appliquant, l'une contre l'autre, deux surfaces en des polymères thermofusibles identiques ou différents contenant un additif réactivable et en les soumettant localement à l'action d'une source de micro-ondes en les comprimant l'une contre l'autre.

13°) Produit selon la revendication 9, caractérisé en ce qu'il est constitué par un film ou un manchon en un polymère thermofusible ayant subi un traitement permettant de le rendre thermorétractable et comportant des zones dans lesquelles il est combiné à un additif réactivable.

14°) Produit selon la revendication 9, caractérisé en ce qu'il est constitué par un film chauffant ou une plaque chauffante en un polymère thermodurcissable comportant des zones dans lesquelles il est combiné à un additif réactivable.
